# EUROPÄISCHE PATENTANMELDUNG

(11) **EP 2 581 165 A2**
(43) Veröffentlichungstag der Anmeldung: **17.04.2013**
(21) Anmeldenummer: 12182897.4
(22) Anmeldetag: 04.09.2012
(51) Int. Cl.: B23K 37/02

(54) **Verfahren zur Bestimmung einer Lageänderung eines Werkzeuges sowie das Werkzeug und die Werkzeugsteuerung**

(30) Priorität: 20.09.2011 DE 102011053798
(71) Anmelder: Dritte Patentportfolio Beteiligungsgesellschaft mbH & Co. KG, 12529 Schönefeld (DE)
(72) Erfinder: Delin, Marcus Dr.-Ing., 25479 Ellerau (DE); Fuchs, Normen, 18057 Rostock (DE)
(74) Vertreter: Zech, Stefan Markus

(57) **Zusammenfassung**

Die Erfindung betrifft ein Verfahren zur Bestimmung einer Lageänderung eines handgeführten Werkzeugs (1) im Raum, welches folgende Schritte aufweist: Abgleichen einer anfänglichen Werkzeuglage mit einer Bezugslage zur Bestimmung wenigstens eines ersten Positionsvektors des Werkzeuges, wobei zumindest eine Komponente des ersten Positionsvektors durch die Messung einer Komponente der Erdbeschleunigung in Richtung einer vorbestimmten Achse des Werkzeugs bestimmt wird (1); Erfassung einer Veränderung der Werkzeuglage während einer tatsächlichen Lageänderung des Werkzeugs (1) im Raum durch Bestimmung wenigstens einer Winkelabweichung eines neu bestimmten, zweiten, Positionsvektors von wenigstens einem zeitlich vorhergehenden Positionsvektor, wobei nach der Lageänderung zumindest eine Komponente des zweiten Positionsvektors durch Messung der Komponente der Erdbeschleunigung in Richtung der vorbestimmten Achse des Werkzeuges bestimmt wird; Bereitstellen einer Information über die Orientierung des Werkzeugs (1), welche aus der wenigstens einen Winkelabweichung ermittelt wird.

## Beschreibung

Die Erfindung betrifft ein Verfahren zur Bestimmung einer Lageänderung eines handgeführten Werkzeuges im Raum sowie ein Werkzeug und Werkzeugsteuerung zum Ausführen eines solchen Verfahrens.

Trotz der stark voranschreitenden technologischen Entwicklung etwa auf dem Gebiet der Robotertechnik sind handgeführte Werkzeuge, insbesondere für spezielle Anwendungen als auch für im industriellen Maßstab sich nicht lohnende Anwendungen weiterhin stark nachgefragt. Hierbei erfolgt die Bearbeitung eines Werkstoffes durch ein handgeführtes Werkzeug, welches durch einen Bediener oder Werker manuell gehandhabt wird. Um aber befriedigende Arbeitsergebnisse zu erlangen, sind mitunter ein hohes Geschick sowie langzeitliche Erfahrungen im Umfang mit dem Werkzeug erforderlich. Je nach Anforderungen bzw. je nach Arbeitsaufgabe passt der Werker die Betriebseigenschaften des Werkzeuges an. Typischerweise werden hierzu Änderungen der Steuerparameter in der Werkzeugsteuerung vorgenommen, wodurch das Werkzeug in unterschiedlichen Betriebsmodi verwendet werden kann.

So ist es beispielsweise im Falle eines Schweißwerkzeuges erforderlich, die geometrische Anordnung der zu verschweißenden Materialien im Raum zu berücksichtigen, um eine qualitativ hochwertige Schweißnaht herstellen zu können. Gleichermaßen ist es im Falle eines Sprühwerkzeuges erforderlich, die geometrische Anordnung der zu besprühenden Flächen zu berücksichtigen, damit eine möglichst gleichmäßige und einheitliche Lage an Sprühmittel aufgetragen werden kann.

Problematisch an einer derartigen Änderung des Betriebsmodus eines Werkzeuges ist jedoch, dass der Werker die Arbeit kurzzeitig unterbrechen muss, um eine geeignete Einstellung an der Werkzeugsteuerung vornehmen zu können. Dieser Vorgang vermindert nicht nur die Effizienz des gesamten Arbeitsvorganges, sondern es ist mitunter schwierig, an die Arbeit mit gleich hoher Qualität anzuknüpfen. So kann es beispielsweise beim Ausführen von Schweißaufgaben mittels eines Schweißwerkzeuges nach einer Unterbrechung zu einem unerwünschten Nahtübergang kommen, welcher nicht nur ästhetisch, sondern auch technisch nachteilig für das gesamte Schweißergebnis sein kann.

Um dergleichen Nachteile zu vermeiden, schlägt die EP 1 812 200 B1 eine automatische Werkzeugsteuerung vor, welche mittels eines an einem Arbeitskopf des Werkzeuges angebrachten Sensors die Lage und/oder die Lageänderung des Arbeitskopfes relativ zu einer Bezugslage des Arbeitskopfes abfühlen kann. Nach entsprechend bestimmter Lage bzw. Lageänderung des Arbeitskopfes vermag die Werkzeugsteuerung eine Kenngröße des Werkzeugbetriebs in Abhängigkeit von der abgefüllten Lage bzw. Lageänderung beeinflussen. Damit vermag die Werkzeugsteuerung jeweils dann eine Änderung des Betriebsmodus vorzunehmen, wenn etwa der Arbeitskopf von dem Werker in eine Lage überführt wird, welche andere Betriebs- oder Arbeitsbedingungen erfordert. So kann insbesondere beim Ausführen eines Schweißverfahrens mittels eines Schweißkopfes der Schweißstrom bzw. die Schweißspannung immer dann vermindert werden, wenn der Schweißkopf in einer Überkopfposition bzw. in einer Wannenposition überführt wird. Folglich kann eine Arbeitsunterbrechung unterbleiben, da der Werker nicht mehr manuell Änderungen an der Werkzeugsteuerung vornehmen muss, um auf veränderte Arbeitsbedingungen zu reagieren.

Nachteilig an dem Verfahren gemäß der EP 1 812 200 B1 ist jedoch, dass die Erfassung der Lage bzw. Lageänderung einen hohen rechnerischen Aufwand erfordert. Um die Lage bzw. Lageänderung im Raum erfassen zu können, sind im einfachsten Falle jeweils die drei Raumkoordinaten x, y und z zu jedem Zeitpunkt zu bestimmen. Zudem ist eine Information darüber erforderlich, wie der Arbeitskopf in Bezug zu einer vorgegebenen Raumlage orientiert ist. Hierzu sind im einfachsten Falle zwei Winkelgrößen, Polarwinkel und Azimutwinkel, erforderlich, die eine Bestimmung der Rotation bzw. Orientierung des Arbeitskopfes in Bezug auf eine Lage des Arbeitskopfes im Raum zu bestimmen vermögen. Die zeitlich kontinuierliche Bestimmung dieser Größen und elektronische Verarbeitung erfordert jedoch einen Aufwand, der vor allem bei schnellen und häufigen Lageänderungen des Arbeitskopfes nachteilig sein kann.

Der vorliegenden Erfindung liegt folglich die Aufgabe zugrunde, ein Verfahren zur Bestimmung einer Lageänderung eines handgeführten Werkzeugs im Raum bzw. ein solches Werkzeug mit Werkzeugsteuerung vorzuschlagen, welche die Nachteile aus dem Stand der Technik vermeiden. Insbesondere soll ein Verfahren sowie ein Werkzeug mit Werkzeugsteuerung vorgeschlagen werden, welches eine einfache sowie praktikable Möglichkeit der Bestimmung einer Lageänderung eines handgeführten Werkzeugs erlaubt.

Diese Aufgabe wird durch ein Verfahren nach Patentanspruch 1 sowie ein Werkzeug mit Werkzeugsteuerung gemäß Patentanspruch 14 gelöst.

Insbesondere wird die Aufgabe durch ein Verfahren zur Bestimmung einer Lageänderung eines handgeführten Werkzeugs im Raum gelöst, welches folgende Schritte aufweist: Abgleichen einer anfänglichen Werkzeuglage mit einer Bezugslage zur Bestimmung wenigstens eines ersten Positionsvektors des Werkzeuges, wobei zumindest eine Komponente des ersten Positionsvektors durch die Messung einer Komponente der Erdbeschleunigung in Richtung einer vorbestimmten Achse des Werkzeugs bestimmt wird; Erfassung einer Veränderung der Werkzeuglage während einer tatsächlichen Lageänderung des Werkzeugs im Raum durch Bestimmung wenigstens einer Winkelabweichung eines neu bestimmten, zweiten, Positionsvektors von wenigstens einem zeitlich vorhergehenden Positionsvektor, wobei nach der Lageänderung eine Komponente des zweiten Positionsvektors durch Messung der Komponente der Erdbeschleunigung in Richtung der vorbestimmten Achse des Werkzeuges bestimmt wird; Bereitstellen einer Information über die Orientierung des Werkzeugs, welche aus der wenigstens einen Winkelabweichung ermittelt wird.

Weiterhin wird die der Erfindung zugrundeliegende Aufgabe durch ein Werkzeug und eine Werkzeugsteuerung, insbesondere zum Ausführen eines solchen Verfahrens gelöst.

Eine Kernidee der vorliegenden Erfindung ist darin zu sehen, dass die Bestimmung einer Lageänderung zunächst auf der Bestimmung einzelner Positionsvektoren beruht. Hierbei ist ein erster Positionsvektor zu Beginn des Arbeitsprozesses festzulegen, welcher eine Bezugslage des Werkzeuges für zeitlich nachfolgende Positionsvektoren darstellen kann. Die Bestimmung der Bezugslage erfolgt also über die Definition einer anfänglichen Werkzeuglage, in welcher der handhabende Werker das Werkzeug hält. Bewegt nun der Werker das Werkzeug während eines Arbeitsvorganges, kommt es zu einer Lageveränderung des Werkzeugs im Raum, welche mittels einer Winkelabweichung eines neu bestimmten Positionsvektors von einem zeitlich vorhergehenden Positionsvektor bzw. von dem zuerst bestimmten Positionsvektor des Werkzeuges bestimmt wird. Hierbei bildet die wenigstens eine bestimmte Winkelabweichung die für die Einstellung eines Betriebsmodus des Werkzeuges einzige Stell- bzw. Regelgröße. Aufgrund der Information über die wenigstens eine Winkelabweichung kann nämlich in ausreichendem Maße die Lageänderung des Werkzeugs im Raum bestimmt werden, so dass die Werkzeugsteuerung auf unterschiedliche Arbeitsbedingungen geeignet reagieren kann.

Dadurch, dass der Positionswechsel (zumindest teilweise) durch eine Komponente der Erdbeschleunigung bzw. des Erdbeschleunigungsvektors in Richtung einer vorbestimmten Achse des Werkzeugs bestimmt wird, wird die Bestimmung der Lageänderung in besonderem Maße vereinfacht. Indem die Komponente der Erdbeschleunigung in Richtung einer vorgeschriebenen Achse des Werkzeuges gemessen wird, ändert sich diese Komponente bei einer Drehung des Werkzeuges. Ein wesentlicher Aspekt der Erfindung liegt somit darin, dass aus einer Variation einer bestimmten Komponente der Erdbeschleunigung, die in Richtung einer vorgeschriebenen Achse des Werkzeuges gemessen wird, auf eine Drehung des Werkzeuges rückgeschlossen wird. Liegt die vorbestimmte Achse des Werkzeuges anfänglich beispielsweise in Richtung der Erdbeschleunigung, würde die Messung einer Komponente der Erdbeschleunigung in Richtung der vorbestimmten Achse einen maximalen Wert ergeben. Wird das Werkzeug nun um 90° verkippt (was einer Lageänderung des Werkzeugs entspricht) würde die Komponente der Erdbeschleunigung in Richtung der vorbestimmten Achse einen Wert von (idealerweise) Null ergeben. Wird das Werkzeug um beispielsweise 180° verkippt, so entspricht die Komponente der Erdbeschleunigung dem maximalen Wert (allerdings mit umgekehrtem Vorzeichen).

Ein wesentlicher Aspekt der Erfindung liegt auch darin, dass die Bestimmung der Lageänderungen bei einem handgeführten Werkzeug durchgeführt wird. Unter einem handgeführten Werkzeug soll ein Werkzeug verstanden werden, das ausgebildet ist, um die manuelle Bedienung durch einen Werker zu ermöglichen. Derartige handgeführte Werkzeuge zeichnen sich beispielsweise durch einen Handgriff und dergleichen aus, die eine Bewegung und Verkippung des Werkzeuges durch den Werker ermöglichen. Unter "handgeführt" soll insbesondere keine automatische Vorrichtung, beispielsweise ein Roboter oder dergleichen, verstanden werden, der lediglich indirekt, beispielsweise durch das Betätigen von Knöpfen oder die Einstellung von Programmen bewegt wird. Derartige automatische Vorrichtungen weisen insbesondere kein Greifelement für einen Werker auf.

Unter einer "vorbestimmten Achse" des Werkzeuges ist eine beliebige Achse zu verstehen, die derart durch das Werkzeug definiert wird, dass diese sich mit dem Werkzeug mitdreht. Die Achse ist somit gegenüber dem Werkzeug feststehend. Vorzugsweise kann es sich bei der Achse um eine Symmetrieachse handeln und/oder um eine Achse, die durch die Ausstoßrichtung eines Werkstoffes definiert wird.

Anders als in der EP 1 812 200 B1 wird eine Lageänderung nicht über einen Sensor durchgeführt, der einen Hohlkörper mit Quecksilber umfasst. Bei der vorliegenden Erfindung wird vielmehr mindestens ein Beschleunigungssensor zur Verfügung gestellt. Weiterhin erfolgt vorliegend die Bestimmung der Lageänderung im Raum nicht durch eine genaue Beschreibung des Werkzeugs bzw. der Werkzeugorientierung im Raum, sondern lediglich aufgrund wenigstens einer Winkelabweichung eines Positionsvektors, welcher sich von einem zeitlich vorhergehenden Positionsvektor unterscheidet. Aufgrund der anfänglichen Initiierung bzw. Abgleichung der Werkzeuglage mit einer Bezugslage zur Bestimmung des ersten Positionsvektors des Werkzeugs ist eine Bestimmung der absoluten Lage des Werkzeugs im Raum nicht mehr erforderlich. Vielmehr ist es ausreichend, die Änderung der Werkzeuglage im zeitlichen Verlauf zu bestimmen, um feststellen zu können, ob das Werkzeug mittels der Werkzeugsteuerung in einem abweichenden Betriebsmodus betrieben werden soll. Da unterschiedliche Betriebsmodi lediglich in Abhängigkeit von der relativen Werkzeuglage in Bezug auf ein Werkstück bestimmt werden können, hat es sich als ausreichend erwiesen, diese relative Lage bzw. die Lageänderungen des Werkzeugs im Raum über lediglich wenigstens eine Winkelabweichung zu bestimmen.

Die Abgleichung der Werkzeugslage mit einer Bezugslage kann zum Beispiel erfolgen, wenn sich das Werkzeug in einer Halterung mit einer genau definierten Position und Orientierung befindet. Ebenso ist es möglich, dass der Abgleich von einer Bedienperson durch einen Knopfdruck ausgelöst wird. In wieder anderen Ausführungsformen kann es auch vorgesehen sein, dass der Abgleich automatisch erfolgt.

Hierbei ist auch darauf hinzuweisen, dass die wenigstens eine Winkelabweichung weder im Sinne eines Polarwinkels noch eines Azimutwinkels in einem polaren Koordinatensystem verstanden werden muss. Ausreichend ist es, die räumliche Winkelabweichung zweier Positionsvektoren zu bestimmen, um daraus Rückschlüsse über die tatsächliche Lageänderung des Werkzeugs im Raum zu erhalten. Aus dieser Lageänderung bzw. aus dieser wenigstens einen Steuergröße kann bereits ermittelt werden, ob durch die Werkzeugsteuerung für das Werkzeug ein neuer Betriebsmodus eingestellt werden soll oder nicht.

Erfindungsgemäß ist es also möglich, aufgrund einer stark reduzierten Information, das heißt der wenigstens einen Winkelabweichung, einen geeigneten Betrieb eines Werkzeuges im Sinne einer automatischen Steuerung bzw. Regelung zu gewährleisten. Gemäß des Verfahrens zur Bestimmung einer Lageänderung eines handgeführten Werkzeuges im Raum erlaubt die wenigstens eine Winkelabweichung das Bereitstellen einer Information über die Orientierung des Werkzeuges in einer Form, welche beispielsweise von der Werkzeugsteuerung geeignet aufgenommen werden kann. Die Information über die Orientierung des Werkzeuges kann hierbei lediglich in dem Wert der Winkelabweichung oder aber auch in einem bereits weiter verarbeiteten Datenwert zu sehen sein.

Ein weiterer Kern der vorliegenden Erfindung besteht darin, dass das erfindungsgemäße Verfahren unabhängig von der Werkzeuggeometrie bzw. eines möglicherweise an dem Werkzeug angebrachten Sensors ist. Vielmehr ist das erfindungsgemäße Verfahren eine indirekte Messmethode, welche hohe Flexibilität auch hinsichtlich der Positionierung solcher Sensoren an dem Werkzeug erlaubt. Die Werkzeuggeometrie mag hierbei zwar zur Unterstützung des Verfahrens herangezogen werden, doch ist dies nicht erforderlich, da anfänglich die Werkzeugslage mit einer Bezugslage zur Bestimmung wenigstens eines ersten Positionsvektors abgeglichen wird. Die Unabhängigkeit des erfindungsgemäßen Verfahrens von den geometrischen Gegebenheiten des Werkzeuges bzw. von einer möglichen Sensorpositionierung am Werkzeug erlaubt zudem, das Verfahren mittels einer nachrüstbaren Orientierungsbestimmungseinheit an einem bereits vorhandenen Werkzeug mit Werkzeugsteuerung auszuführen.

Gemäß einer besonders bevorzugten Ausführungsform des erfindungsgemäßen Verfahrens erfolgt die Erfassung der Veränderung der Werkzeugslage mittels wenigstens eines am Werkzeug angebrachten Sensors, welcher die wenigstens eine Winkelabweichung direkt oder indirekt erfasst. Eine direkte Erfassung könnte beispielsweise mittels geeigneter Neigungssensoren erfolgen. Eine indirekte Erfassung wird beispielsweise mittels Sensoren möglich, welche den Bewegungs- bzw. Beschleunigungszustand des Werkzeuges im Arbeitsprozess verfolgen können. Nach einfacher Auswertung der Sensorinformation kann somit die wenigstens eine Winkelabweichung bestimmt werden, welche als Weiterinformation zur Orientierung des Werkzeuges bereitgestellt werden kann. Erforderlich ist jedoch, dass der wenigstens eine an das Werkzeug angebrachte Sensor mit dem Werkzeug während des Arbeitsvorganges verbunden bleibt. Hierbei kann der wenigstens eine Sensor geeignet an die Werkzeuggeometrie angepasst sein bzw. in das Werkzeug integriert sein. Vorzugsweise ist der wenigstens eine Sensor in einen Griffbereich des Werkzeugs integriert. Die Position des Sensors ist jedoch aufgrund der anfänglichen Abgleichung der Werkzeuglage mit einer Bezugslage zur Bestimmung des wenigstens einen ersten Positionsvektors des Werkzeuges ohne weiteren Einfluss auf das erfindungsgemäße Verfahren. Dennoch kann es zur Bestimmung einer genaueren Werkzeuglage auch vorteilhaft sein, die Positionierung des Sensors in Bezug auf die Werkzeuggeometrie zu nutzen bzw. eine solche auch vorzugeben.

Gemäß einer weiteren Ausführungsform des erfindungsgemäßen Verfahrens ist die wenigstens eine Winkelabweichung wenigstens 0 Grad und höchstens 180 Grad. So ist es etwa bei Schweißwerkzeugen zur Ausführung von Schweißaufgaben lediglich erforderlich, zu bestimmen, welche Lage bzw. Orientierung das Schweißwerkzeug in Bezug zum Erdbeschleunigungsfeld aufweist. Denn je nach relativer Lage zur Richtung der Erdbeschleunigung kann der Schweißvorgang unter größerem bzw. kleinem Eintrag von Schweißenergie in das zu verarbeitende Material erfolgen. Hierbei ist es aber ausreichend zu wissen, welchen Wert die Winkelabweichung im Bereich zwischen 0 Grad und 180 Grad im Verhältnis zur Richtung der Erdbeschleunigung aufweist. Folglich kann eine weitere Reduzierung der durch die Werkzeugsteuerung zu verarbeitenden Information erfolgen, welche eine schnellere und effizientere Nachführung bzw. Steuerung oder Regelung durch die Werkzeugsteuerung erlaubt.

Gemäß einer weiteren vorteilhaften Ausführungsform des erfindungsgemäßen Verfahrens umfasst die Bestimmung wenigstens einer Winkelabweichung die Bestimmung einer Neigungslage des Werkzeuges relativ zu einem Positionsvektor. Die Neigungslage stellt neben der wenigstens einen Winkelabweichung eine weitere Information über die Orientierung des Werkzeuges relativ zu einem Positionsvektor bereit. Hierbei erfasst die Neigungslage die relative Rotation des Werkzeuges in Bezug auf den Positionsvektor und kann beispielsweise durch einen Polar- und/oder einen Azimutwinkel wiedergegeben werden. Die Berücksichtigung einer Neigungslage des Werkzeugs erlaubt eine Berücksichtigung der exakten Werkzeugorientierung in Bezug auf ein zu verarbeitendes Werkstück und kann mitunter für kompliziertere Arbeitsaufgaben vorteilhaft sein.

Entsprechend einer weiteren Ausführungsform des erfindungsgemäßen Verfahrens ist die Bezugslage durch die Richtung der Erdbeschleunigung bestimmt. Folglich wird zur Bestimmung des ersten Positionsvektors des Werkzeuges während des Vorganges des Abgleichens der anfänglichen Werkzeuglage das Werkzeug in eine vorbestimmte relative Lage in Bezug zur Richtung der Erdbeschleunigung initialisiert. Zur Initialisierung wird beispielsweise eine vorbestimmte Achse des Werkzeugs, z. B. der Brennerkopf eines Schweißwerkzeuges, in eine senkrechte Lage versetzt, wodurch eine Übereinstimmung mit der Richtung der Erdbeschleunigung erfolgt. Der in dieser Orientierung bestimmte erste Positionsvektor wird erfasst, gespeichert und kann nun einen Bezugsvektor für alle weiteren bestimmten Positionsvektoren darstellen. Bei einer Veränderung des Werkzeuges werden nun in geeigneten Zeitintervallen neue Positionsvektoren bestimmt und mit dem gespeicherten ersten Positionsvektor elektronisch verglichen. Der Vergleich ermöglicht die Bestimmung der wenigstens einen Winkelabweichung und damit eine Aussage über die aktuelle Orientierung des Werkzeugs im Raum. Ist die wenigstens eine Winkelabweichung zwischen 0 Grad und 180 Grad, entspricht beispielsweise der erste Positionsvektor als Initialisierungsvektor einer Orientierung von 0 Grad zur Richtung der Erdbeschleunigung. Für 180 Grad sind der erste Positionsvektor sowie der zeitlich nachfolgend bestimmte Positionsvektor entgegengesetzt gerichtet, was etwa einer Überkopfposition des Werkzeuges entspricht. Bei 90 Grad wird das Werkzeug beispielsweise in einer horizontalen Orientierung gehalten.

Gemäß einer weiteren Ausführungsform des erfindungsgemäßen Verfahrens erfolgt die Bestimmung der Winkelabweichung mittels Berechnung des Quotienten aus dem Skalarprodukt und dem Betragsprodukt zwischen einem neu ermittelten Positionsvektor und wenigstens einem zeitlich vorhergehenden Positionsvektor. Die Bestimmung der Winkelabweichung ist hierbei elektronisch besonders leicht zu realisieren. Gemäß der Berechnung des Quotienten aus dem Skalarprodukt und dem Betragsprodukt zwischen zwei Positionsvektoren lässt sich zunächst der Kosinus des Zwischenwinkels bestimmen, aus welchem leicht der Zwischenwinkel durch trigonometrische Berechnung selbst bestimmt werden kann.

Entsprechend einem weiteren äußerst vorteilhaften Aspekt des erfindungsgemäßen Verfahrens sind der oder die Beschleunigungssensoren statische Beschleunigungssensoren und die wenigstens eine Winkelabweichung wird mittels statischer Beschleunigungswerte der Sensoren berechnet. Als zweckmäßig haben sich hierbei statische, dreiachsige Beschleunigungssensoren erwiesen, welche erlauben, die statische Erdbeschleunigung in drei Achsen sowie zusätzlich auch noch dynamische Beschleunigungswerte zu bestimmen, welche aus einer Bewegungsänderung resultieren. Für die Bestimmung der Orientierung des Werkzeuges sind hierbei jedoch lediglich die statischen Beschleunigungsanteile erforderlich. Die dynamischen Beschleunigungsanteile können jedoch für weitergehende Funktionen genutzt werden. Alternativ hierzu ist aber auch die Verwendung von drei einachsigen Beschleunigungssensoren sinnvoll, welche in einer geeigneten Orientierung relativ zueinander am Werkzeug befestigt sind.

Die Art der für das erfindungsgemäße Verfahren geeignet zu verwendenden Sensoren unterscheiden sich durch Messbereich, Genauigkeit bzw. Auflösung, Größe, Datenübertragung sowie deren Preis. Gemäß geeigneter Ausführungsformen solcher Sensoren kann der Messbereich im Bereich zwischen -2g und +2g gewählt werden (g entspricht hier dem Betrag der Erdbeschleunigung). Die Sensoren sind vorzugsweise robust und stoßempfindlich und können überdies über einen größeren Temperaturbereich eingesetzt werden. Ein solcher Temperaturbereich erstreckt sich beispielsweise zwischen -15 °C und +100 °C. Die Größe solcher Sensoren bestimmt typischerweise die Auflösung oder Genauigkeit des Sensors und kann je nach Arbeitsaufgabe zwischen wenigen Millimetern Kantenlänge bis zu über 1 cm Kantenlänge aufweisen. Zudem gibt es analoge als auch digitale Sensoren, welche vorzugsweise für das erfindungsgemäße Verfahren verwendet werden können. Die Datenübertragung kann beispielsweise mittels eines Spannungssignal über einen I²C- oder SPI-Bus erfolgen.

Gemäß einer weiteren Ausführungsform des erfindungsgemäßen Verfahrens verfügen derartige Sensoren auch über Zusatzfunktionalitäten, wie beispielsweise einer Erkennung von Freifall oder von Schwellwerten zur geeigneten Filterung und Signalverarbeitung. Eine Freifallerfassung ermöglicht beispielsweise die Implementierung geeigneter Sicherheitsfunktionen, etwa wenn das Werkzeug unkontrolliert dem Werker aus dessen Händen fällt. So kann beispielsweise ein Schweißbrenner im Falle eines Freifalls automatisch ausgeschaltet werden. Überdies ist es auch möglich, mittels vorbestimmter Klopfzeichen am oder mit dem Werkzeug einen geeigneten Betriebsmodus mittels der Werkzeugsteuerung einzustellen. Solche weitergehenden Funktionen können durch die Werkzeugsteuerung gezielt unterstützt werden.

Gemäß einer weiteren Ausführungsform des erfindungsgemäßen Verfahrens umfassen der oder die Sensoren einen dreiachsigen Beschleunigungssensor. Alternativ hierzu können auch drei einachsige Beschleunigungssensoren umfasst sein.

Gemäß einem weiterführenden Aspekt des erfindungsgemäßen Verfahrens kann der oder die Beschleunigungssensoren dynamische Beschleunigungswerte erfassen, welche zur Bestimmung wenigstens einer Geschwindigkeitskomponente des Werkzeugs geeignet sind. Die dynamischen Beschleunigungswerte können typischerweise für zusätzliche Funktionen genutzt werden. So kann beispielsweise durch die Integration dynamischer Beschleunigungswerte über die Zeit eine geeignete Geschwindigkeitskomponente berechnet werden. Wird die wenigstens eine so bestimmte Geschwindigkeitskomponenten beispielsweise auch noch hinsichtlich der auftretenden Querbeschleunigungen korrigiert bzw. die Querbeschleunigungen kompensiert, so ist es ebenfalls möglich, hierdurch eine Schweißgeschwindigkeit zu ermitteln. Eine solche Schweißgeschwindigkeit kann beispielsweise anstatt oder auch zusätzlich zur Orientierungsinformation für die Einstellung der Information über die Orientierung des Werkzeuges verwendet werden.

Weiter können dynamische Beschleunigungswerte auch genutzt werden, um Bewegungen voneinander zu unterscheiden. So ist beispielsweise beim Schweißen mittels eines Schweißwerkzeuges die Unterscheidung der Schweißrichtung nach oben (Position PF nach DIN EN ISO 6947) und nach unten (Position PG nach DIN EN ISO 6947) eine wichtige Information, welche eine verbesserte Steuerung bzw. Regelung des Werkzeugs durch die Werkzeugsteuerung erlaubt.

Gemäß einer weiteren Ausführungsform des erfindungsgemäßen Verfahrens werden die Beschleunigungswerte wenigstens eines Sensors relativ zu dem Wert der Erdbeschleunigung berechnet. Der Wert der Erdbeschleunigung ist hierbei typischerweise vorgegeben. Demgemäß kann die Bestimmung der wenigstens einen Winkelabweichung eines neu bestimmten Positionsvektors von einem zeitlich vorhergehenden Positionsvektor erleichtert erfolgen, wobei nur Relativwerte zur Berechnung stehen.

Gemäß einem weiteren Aspekt des Verfahrens gemäß der Erfindung erfolgt die Bestimmung der wenigstens einen Winkelabweichung kontinuierlich nach dem Abgleichen der anfänglichen Werkzeuglage in regelmäßigen Zeitintervallen, vorzugsweise mit einer Frequenz von wenigstens 100 Hz, insbesondere von wenigstens 10 Hz und vorzugsweise von wenigstens 1 Hz. Je nach Arbeitsverfahren, können so auch relativ schnelle Bewegungsänderungen, die zu einer Lageänderung des handgeführten Werkzeugs führen, erfasst werden und zur Berechnung der wenigstens einen Winkelabweichung beitragen. Für gewöhnliche Schweißverfahren mittels handgeführter Werkzeuge kann insbesondere eine Frequenz von 1 Hz bereits ausreichend sein, da bei einem kontinuierlichen Schweißprozess keine so schnellen Änderungen der Werkzeuglage erfolgen, dass eine Zeitauflösung von unterhalb einer Sekunde erforderlich erscheinen. Insbesondere ist es auch möglich, die Bestimmung der wenigstens einen Winkelabweichung dann in relativ kurzen Zeitintervallen vorzunehmen, wenn das Werkzeug noch nicht in Betrieb ist, jedoch eine anfängliche Werkzeuglage zum Abgleichen einer Bezugslage erfolgt ist. Wird der Arbeitsbetrieb mit dem Werkzeug aufgenommen, kann die Bestimmung der wenigstens einen Winkelabweichung zeitlich gesehen relativ langsamer verlaufen. Wenn auch eine Falldetektion, z.B. mit daraus resultierender Abschaltung des Werkzeugs vorgesehen sein soll, kann wiederum auch während des Arbeitsbetriebs eine relativ schnelle Erfassung der Winkellage sinnvoll sein. Somit wäre es z.B. möglich, dass bei einem detektierten Fallzustand die Abschaltung des Werkzeugs erfolgt, bevor das Werkzeug möglicherweise auf den Boden aufschlägt.

Entsprechend einem weiteren Aspekt des Verfahrens zur Bestimmung einer Lageänderung eines handgeführten Werkzeuges berücksichtigt die Ermittlung der Information über die Orientierung des Werkzeugs aus der wenigstens einen Winkelabweichung die Lage des Sensors am Werkzeug. Eine Berücksichtigung der Lage des Sensors am Werkzeug ermöglicht beispielsweise die Rotation des Werkzeuges relativ zu einem Positionsvektor zu bestimmen, so dass die Orientierung von Werkzeug und zu bearbeitetem Bauteil etwa eindeutig bestimmt werden kann. Beispielsweise kann damit eine Lageinformation bzw. Orientierungsinformation erhalten bzw. berechnet werden, welche Auskunft darüber gibt, mit welchem Winkel das Werkzeug gegenüber dem zu bearbeitenden Material orientiert ist. So ist es beispielsweise bei einem Schweißverfahren denkbar, über den Anstellwinkel des Werkzeugs relativ zum Material den Energieeintrag pro Fläche auf dem Material zu bestimmen und folglich bei ungeeigneten Werten den Schweißstrom bzw. Schweißspannung oder allgemein Schweißparameter einzustellen oder nachzuführen. Auch bei Bohr- oder Fräsverfahren sowie bei Fügeverfahren oder Sprühverfahren kann es hilfreich sein, die Qualität des Arbeitsergebnisses durch eine vorteilhafte relative Orientierung des zu bearbeitenden Werkzeuges sowie des Werkzeuges zu beeinflussen. Bei genauer Kenntnis der Lage des Sensors am Werkzeug und Berücksichtigung der Werkzeuggeometrie ist die zur Verfügung stehende Information ausreichend, um die Lage bzw. Orientierung des Werkzeugs eindeutig zu bestimmen.

Gemäß einer weiteren Ausführungsform des erfindungsgemäßen Verfahrens ist der zeitlich vorhergehende Positionsvektor zur Bestimmung wenigstens einer Winkelabweichung ein vorbestimmter Referenzvektor, insbesondere der Referenzvektor der Erdanziehungskraft. So wird ausführungsgemäß die wenigstens eine Winkelabweichung stets in Bezug auf die Richtung des Erdbeschleunigungsfeldes bestimmt, wodurch eine für die meisten Arbeitsverfahren ausreichende Orientierungsinformation bestimmt werden kann. Bevorzugt kann die Erdanziehungskraft sowie die Richtung der Erdanziehungskraft mit einem eigens dafür vorgesehenen Sensor bestimmt werden, so dass zu jedem Zeitpunkt der Bestimmung wenigstens einer Winkelabweichung ein geeigneter Wert der Erdanziehungskraft sowie ein geeigneter Richtungsvektor zur Verfügung steht. Ebenfalls kann ein derartiger Referenzvektor vorab in der Werkzeugsteuerung gespeichert werden.

Entsprechend einer weiteren Ausführungsform des erfindungsgemäßen Verfahrens wird nach dem Bereitstellen einer Information über die Orientierung des Werkzeugs wenigstens eine Steuergröße des Werkzeugs ermittelt, welche zur Übertragung an eine Werkzeugsteuerung vorgesehen ist. Die Ermittlung der wenigstens einen Steuergröße kann hierbei in der Werkzeugsteuerung selbst bzw. in einer dieser vorgeschalteten Vorrichtung erfolgen. Demgemäß kann die Werkzeugsteuerung geeignete Steuer- bzw. Regelgrößen aufnehmen, welche unmittelbar umgesetzt und zur Steuerung bzw. Regelung eines Betriebsmodus des Werkzeuges verwendet werden können. Demnach erlaubt das ausführungsgemäße Verfahren eine schnelle und effiziente Bereitstellung wenigstens einer solchen Steuergröße.

Gemäß einer weiteren Ausführungsform des erfindungsgemäßen Verfahrens werden die bereitgestellte Information über die Orientierung des Werkzeuges und/oder der Wert der wenigstens einen Steuergröße auf einem Datenspeicher abgespeichert. Die Speicher erlaubt einerseits dem Werker eine kontinuierliche Nachverfolgung des Werkvorganges und kann diesen auch zu Übungs- und Trainingszwecken in geeigneter Aufbereitung zur Verfügung gestellt werden. Weiter erlaubt die Datenspeicherung eine Nachverfolgung des Werkvorganges hinsichtlich einer Qualitätssicherung und kann zur Fehlerbehebung bzw. zu Fehleranalysen beitragen.

Gemäß einer weiteren Ausführungsform des erfindungsgemäßen Verfahrens wird neben einer Information über die Orientierung des Werkzeugs auch wenigstens ein Steuerparameter dann bereitgestellt, wenn das Werkzeug eine vorbestimmte Lageänderung im Raum vollführt, welche als vorbestimmtes Beschleunigungsmuster erfasst werden kann. Ein Steuerparameter kann im Sinne einer Steuergröße eine Information zur weiteren Verarbeitung durch eine Werkzeugsteuerung darstellen. Insbesondere ist ein Steuerparameter eine Steuergröße, welche unverändert durch die Werkzeugsteuerung zur Steuerung bzw. Regelung aufgenommen werden kann. Ausführungsgemäße Lageänderungen im Raum sind beispielsweise Beschleunigungsspitzen und Beschleunigungsstufen, welche eine unerwünschte Werkzeugführung signalisieren. So wird beispielsweise bei unbeabsichtigtem Fallenlassen eines Werkzeuges, insbesondere eines Schweißwerkzeuges eine Beschleunigungsstufe erfasst, die eine unerwünschte Werkzeugführung bzw. eine für den Werker gefährliche Werkzeugführung signalisiert. Alternativ können bestimmte Muster, z.B. bestimmte plötzliche Beschleunigungen und Rotationen des Werkzeugs, auf einen freien Fall hindeuten. Demgemäß kann eine geeignete Information bzw. wenigstens ein Steuerparameter bereitgestellt werden, welcher von einer Werkzeugsteuerung zu einer Notabschaltung umgesetzt wird.

Gemäß einem weiteren Aspekt des erfindungsgemäßen Verfahrens erlaubt das Abgleichen einer anfänglichen Werkzeuglage mit einer Bezugslage die Bestimmung zweier Positionsvektoren des Werkzeuges, welche senkrecht zueinander liegen und ein zweidimensionales Koordinatensystem definieren und die Erfassung der Veränderung der Werkzeugslage während einer tatsächlichen Lageänderung des Werkzeugs im Raum die Erfassung eines neu bestimmten Positionsvektors in Projektion zu dem Koordinatensystem umfasst. Eine derartige Projektion auf ein anfänglich bestimmtes Koordinatensystem erlaubt dem Benutzer eine Richtung aufzuzeigen, in welche sein Werkzeug bei der Handhabung beispielsweise abweicht oder kippt bzw. in welche Richtung eine Korrektur zur Erzielung eines erwünschten Arbeitsergebnisses erfolgen müsste. Im einfachsten Falle ist das definierte zweidimensionale Koordinatensystem ein orthogonales Koordinatensystem, in welchem die Koordinaten der Bezugslage sowie des aktuellen Positionsvektors des Werkzeuges berechnet sind. Anschließend kann über einfache trigonometrische Berechnungen eine Abweichung der Werkzeuglage (Istlage) von der gewünschten Bezugslage (Ursprung des Koordinatensystems) berechnet werden, welche dem Werker anschließend in geeigneter Form zur Verfügung gestellt werden kann, um diesen anzuleiten, die Handhabung des Werkzeuges in besonders vorteilhafter Weise gezielt vorzunehmen.

Die oben genannte Aufgabe wird unabhängig gelöst durch ein Werkzeug und/oder eine Werkzeugsteuerung, insbesondere zum Ausführen des oben beschriebenen Verfahrens, umfassend mindestens einen Beschleunigungssensor zur Messung von mindestens einer, insbesondere zwei, vorzugsweise mindestens drei Komponenten der Erdbeschleunigung in Richtung einer bzw. zweier bzw. dreier vorbestimmter Achsen des Werkzeuges, wobei der Sensor vorzugsweise (fest) mit dem Werkzeug verbunden ist. Dadurch, dass der Sensor (fest) mit dem Werkzeug verbunden ist, nimmt er an einer Drehung bzw. Verkippung des Werkzeuges teil und zeigt somit aufgrund der sich bei einer Drehung bzw. Verkippung des Werkzeuges ändernden Komponente der Erdbeschleunigung einen abweichenden Wert an. Aus der Abweichung dieses Wertes kann wiederum erfindungsgemäß auf die Verkippung bzw. Verdrehung des Werkzeuges bzw. deren Lageänderung rückgeschlossen werden. Dadurch kann eine konstruktiv einfache Feststellung der Lageänderung durchgeführt werden.

Gemäß einem allgemeinen Gedanken (der unabhängig beansprucht wird) wird eine Verwendung eines Beschleunigungssensors vorgeschlagen, wobei der Beschleunigungssensor (fest) mit einem (dem) Werkzeug verbunden ist und mindestens eine Komponente (bzw. zwei oder drei Komponenten) der Erdbeschleunigung in Richtung mindestens einer (bzw. zwei oder drei) vorbestimmter Achsen des Werkzeuges ausmisst.

Gemäß einer besonders bevorzugten Ausführungsform des erfindungsgemäßen Werkzeuges bzw. der Werkzeugsteuerung werden die von wenigstens einem am Werkzeug angebrachten Sensor erzeugten Daten über einen Festleiter an die Werkzeugsteuerung oder an eine mit der Werkzeugsteuerung zusammenwirkende Erfassungseinheit übertragen. Alternativ hierzu kann die Übertragung auch kabellos erfolgen. Während die kabellose Übertragung beispielsweise mittels Radiowellen erfolgen kann, kann der Festleiter zur Übertragung der von dem Sensor erzeugten Daten zusammen mit anderen Leitungen in einem Schlauchpaket, welches Werkzeug und Werkzeugsteuerung verbindet, umfasst sein. Beide Ausführungsformen erlauben eine weitgehend ungehinderte Handhabung des Werkzeugs während des Arbeitsvorganges. Insbesondere die Verwendung eines kabellosen Sensors, welcher mit einer mit der Werkzeugsteuerung zusammenwirkenden Erfassungseinheit selbst zusammenwirkt, erlaubt eine vorteilhafte Nachrüstung von Werkzeug und Werkzeugsteuerung, so dass auch diese die Vorteile und Flexibilität der Orientierungs- bzw. Lagebestimmung nutzen können.

Gemäß einer weiteren Ausführungsform des erfindungsgemäßen Verfahrens ist das Werkzeug ein Schweißwerkzeug. Ebenfalls ist es möglich, dass das Werkzeug ein Fügewerkzeug bzw. ein Bohr- oder Fräswerkzeug oder ein Werkzeug zur Durchführung von Beschichtungen, beispielsweise eine Sprühpistole (bzw. ein Sprüh- oder Spritzwerkzeug).

Entsprechend einer weiteren Ausführungsform des erfindungsgemäßen Werkzeuges und Werkzeugsteuerung ist wenigstens einer des wenigstens einen am Werkzeug angebrachten Sensors an oder in einem Bediengriff oder einem Handteil des Werkzeugs angebracht. Einerseits ist die Anbringung an einem Bediengriff oder an einem Handteil ein bezüglich einer möglichen Beschädigung des Sensors sichere Anbringungsart, andererseits ermöglicht dieser Anbringungsort auch eine klare Definition der Sensorlage in Bezug zur Position des Werkers. Weiter hat sich eine Anbringung an einem Bediengriff oder einem Handteil des Werkzeuges als im Arbeitsablauf relativ wenig störend erwiesen. Denn einerseits wird weder die Balance des Werkzeugs noch die Ausdehnung des Werkzeugs derart beeinflusst, dass der Werker Nachteile im Arbeitsablauf in Kauf nehmen müsste.

Gemäß einer weiteren Ausführungsform des erfindungsgemäßen Werkzeugs und Werkzeugsteuerung wird die Information über die Orientierung des Werkzeugs und/oder der wenigstens eine Wert der wenigstens einen Steuergröße an die Werkzeugsteuerung oder an eine mit der Werkzeugsteuerung zusammenwirkende Erfassungseinheit übertragen. Die Werkzeugsteuerung vermag dementsprechend die Orientierungsinformation bzw. die ihr zugeleitete Steuergröße geeignet zu verarbeiten, um einen geeigneten Betriebsmodus für das Werkzeug auszuwählen. Vorzugsweise kann die Bereitstellung einer Information über die Orientierung des Werkzeuges bzw. die Bereitstellung der wenigstens einen Steuergröße von einem Mikrocontroller vorgenommen werden, welcher noch vor Zuführung der Information an die Werkzeugsteuerung die geeigneten Größen berechnet.

Gemäß einer weiteren Ausführungsform des erfindungsgemäßen Werkzeugs und Werkzeugsteuerung entscheidet die Werkzeugsteuerung auf Grundlage der Information über die Orientierung des Werkzeugs und/oder den wenigstens einen Wert der Steuergröße, ob eine Änderung des Betriebszustands des Werkzeugs vorgenommen wird. Als besonders vorteilhaft erweist sich hierbei eine Ausführungsform gemäß der die Steuergröße bereits ein von der Werkzeugsteuerung direkt zu verarbeitender Steuerparameter ist, welcher unverändert zur Steuerung bzw. Regelung des Werkzeuges aufgenommen und eingelesen werden kann.

Weitere Ausführungsformen der Erfindung ergeben sich aus den Unteransprüchen.

Nachfolgend wir die Erfindung anhand von Ausführungsbeispielen beschrieben, die anhand der Abbildungen näher erläutert werden.

Hierbei zeigen:
- Fig. 1a: eine erste Ausführungsform des erfindungsgemäßen Werkzeuges mit Werkzeugsteuerung in einer Werkzeuglage zur Bestimmung eines ersten Positionsvektors des Werkzeuges;
- Fig. 1b: die in Fig. 1a gezeigte Ausführungsform des erfindungsgemäßen Werkzeuges mit Werkzeugsteuerung nach einer Lageänderung des Werkzeuges zur Bestimmung eines zeitlich nachfolgenden Positionsvektors;
- Fig. 1c: eine schematische Darstellung der Lageänderung des Werkzeuges, welche durch die Werkzeugpositionen gemäß Fig. 1a und Fig. 1b beschrieben wird;
- Fig. 2: eine weitere Ausführungsform des erfindungsgemäßen Werkzeuges mit Werkzeugsteuerung;
- Fig. 3: eine schematische Darstellung einer allgemeinen Lageänderung des Werkzeugs im Raum zur Bestimmung wenigstens einer Winkelabweichung zwischen zeitlich aufeinander folgenden Positionsvektoren;
- Fig. 4: eine schematische Darstellung zweier unterschiedlicher Werkzeuglagen im Raum in Bezug auf unterschiedliche Bereiche, welche verschiedenen Betriebsmodi des Werkzeuges zugeordnet sind;
- Fig. 5: eine weitere Ausführungsform des erfindungsgemäßen Verfahrens zur Bestimmung der vollständigen Werkzeugorientierung im Raum; und
- Fig. 6: ein Flussdiagramm zur Darstellung einer Ausführungsform des erfindungsgemäßen Verfahrens.

In der nachfolgenden Beschreibung werden für gleiche oder gleich wirkende Teile dieselben Bezugszeichen verwendet.

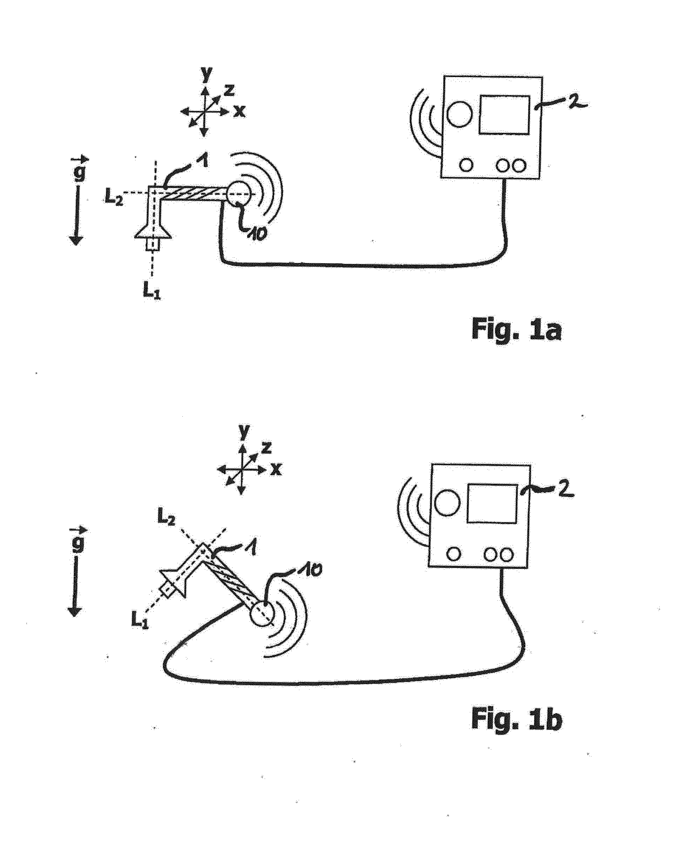

Fig. 1a zeigt eine schematische Darstellung in seitlicher Ansicht einer ersten Ausführungsform des erfindungsgemäßen Werkzeuges 1 mit Werkzeugsteuerung 2. Hierbei handelt es sich bei dem Werkzeug 1 vorzugsweise um ein Schweißwerkzeug. Jede weitere ausführungsgemäß sinnvolle Werkzeugform sei jedoch von der Darstellung des Werkzeuges 1 ebenfalls mit umfasst. Das Werkzeug 1 ist im Raum, welcher durch das symbolisch angedeutete Koordinatensystem mit den Achsen x, y und z dargestellt ist, zunächst beliebig angeordnet. Vorzugsweise ist das Werkzeug 1 mit einer fest vorgegebenen Anordnung relativ zur Richtung des Erdbeschleunigungsfeldes, welches vorliegend durch *̅g̅*̅ veranschaulicht ist, angeordnet. Die Anordnung kann hierbei entweder relativ zur Achse L₂ bestimmt werden, welche entlang der Längsausdehnungsrichtung des Handgriffes des Werkzeuges 1 gerichtet ist, oder entlang der dazu senkrecht verlaufenden Achse L₁, welche in Längsrichtung zum Werkzeugkopf des Werkzeuges 1 verläuft. Zur Bestimmung der Lageänderung des Werkzeuges 1 umfasst dieses am Ende des Handgriffes einen Sensor 10, welcher kabellos mit einem Empfänger in der Werksteuerung 2 kommunizieren kann. Hierbei kann die Werkzeugsteuerung 2 selbst einen geeigneten Empfänger umfassen bzw. mit einem weiteren Empfangsstück bzw. einer weiteren Erfassungseinheit ausgestattet sein, welche eine kabellose Kommunikation ermöglicht.

Um das erfindungsgemäße Verfahren zur Bestimmung einer Lageänderung eines handgeführten Werkzeuges in der Ausführungsform auszuführen, muss zunächst die anfängliche Werkzeuglage mit einer Bezugslage zur Bestimmung wenigstens eines ersten Positionsvektors des Werkzeuges abgeglichen werden. Dieser Vorgang ist in Fig. 1a dargestellt, dort befindet sich nämlich das Werkzeug 1 in einem geometrisch einfachen Verhältnis zu der Richtung der Erdbeschleunigung *̅g̅*̅. Wird das Werkzeug 1 zeitlich nachfolgend nun von einem Werker relativ zu dieser Anfangsposition bewegt, wie beispielsweise in Fig. 1b schematisch dargestellt, erfasst der Sensor 10 die Veränderung der Werkzeuglage im Raum während der tatsächlichen Lageänderung des Werkzeuges 1. Die Erfassung erfolgt hierbei ausführungsgemäß durch die Erfassung der statischen Beschleunigungskomponenten in vorbestimmten Achsen des Werkzeugs (die beispielsweise durch L₁ und/oder L₂ definiert sind). Vorzugsweise ist der Sensor 10 ein dreidimensionaler Beschleunigungssensor, welcher erlaubt, auch statische Beschleunigungskomponenten zu erfassen. Aus den statischen Beschleunigungsanteilen, welche der Sensor 10 erfasst, wird eine Winkelabweichung eines neu bestimmten Positionsvektors in Bezug auf einen zeitlich vorhergehenden Positionsvektor bestimmt. Ausführungsgemäß ist der zeitlich vorhergehende Positionsvektor der erste Positionsvektor, wie in Fig. 1a dargestellt. Ausführungsgemäße kann der erste Positionsvektor auch mit dem Vektor der statischen *̅g̅*̅ Erdbeschleunigung identisch sein.

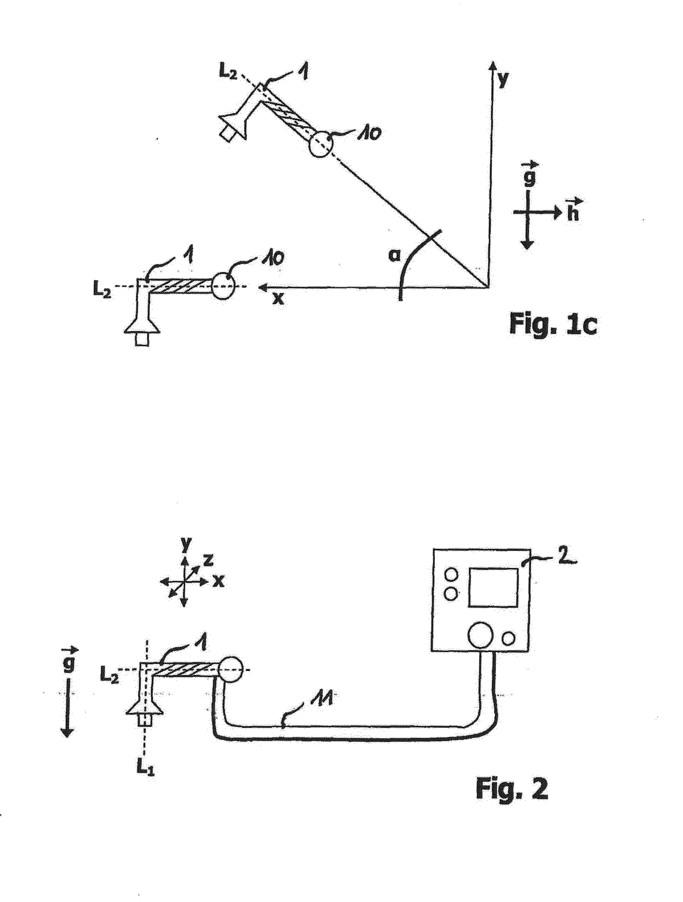

Die Erfassung der Veränderung der Werkzeuglage während der tatsächlichen Lageänderung des Werkzeuges 1 erfolgt durch Bestimmung wenigstens einer Winkelabweichung (vorliegend genau einer Winkelabweichung) α des neu bestimmten Positionsvektors im Vergleich zum zeitlich vorhergehenden Positionsvektor. Fig. 1c zeigt sinnbildlich diesen Schritt der Bestimmung der wenigstens einen Winkelabweichung α. Hierbei wurde zunächst die Längsachse L₂, welche in Längserstreckungsrichtung des Handgriffes des Werkzeuges 1 verläuft, zum Abgleich mit einer Richtung senkrecht zur Erdbeschleunigung *̅g̅*̅ abgeglichen. Der Abgleich erlaubt die Bestimmung wenigstens eines ersten Positionsvektors, welcher vorliegend nicht gezeigt ist, aber sich in x-Richtung erstreckt. Nach erfolgter Veränderung der Werkzeuglage wird ein weiterer Positionsvektor bestimmt (vorliegend ebenfalls nicht gezeigt), so dass eine Winkelabweichung α zwischen dem ersten und zweiten Positionsvektor bestimmt werden kann. Diese Winkelabweichung α erlaubt die Bereitstellung einer geeigneten Information über die Orientierung des Werkzeuges, so dass eine Werkzeugsteuerung nach Erhalt dieser Information einen geeigneten Betriebsmodus des Werkzeuges 1 einstellen kann. Die Wahl des Betriebsmodus ist hierbei abhängig von der Arbeitsaufgabe.

Hierbei ist anzumerken, dass die Winkelabweichung α bestimmt werden kann, indem anfänglich die Werkzeuglage mit der Richtung bzw. Lage des Vektors der Erdbeschleunigung *̅g̅*̅ abgeglichen wird. Demgemäß kann eine Abgleichung mit der in Fig. 1a dargestellten Achse L₁ entlang des Werkzeugkopfes des Werkzeuges 1 erfolgen.

Fig. 2 zeigt eine weitere Ausführungsform des erfindungsgemäßen Werkzeuges 1 mit Werkzeugsteuerung 2, welches sich von den in den Fig. 1a und 1b gezeigten Ausführungsformen lediglich darin unterscheidet, dass der Sensor 10 mit der Werkzeugsteuerung 2 nicht kabellos sondern über einen Festleiter 11 verbunden ist. Der Festleiter 11 kann hierbei in einem Kabelpaket zusammen mit weiteren Zu- und Ableitungen zwischen dem Werkzeug 1 und der Werkzeugsteuerung 2 mit umfasst sein. Wiederum ist es möglich, dass die Übertragung der Sensordaten vom Sensor 10 an die Werkzeugsteuerung nicht direkt erfolgt, sondern über eine Erfassungseinheit, welche vorliegend nicht dargestellt ist, und welche der Werkzeugsteuerung 2 vorgeschaltet ist.

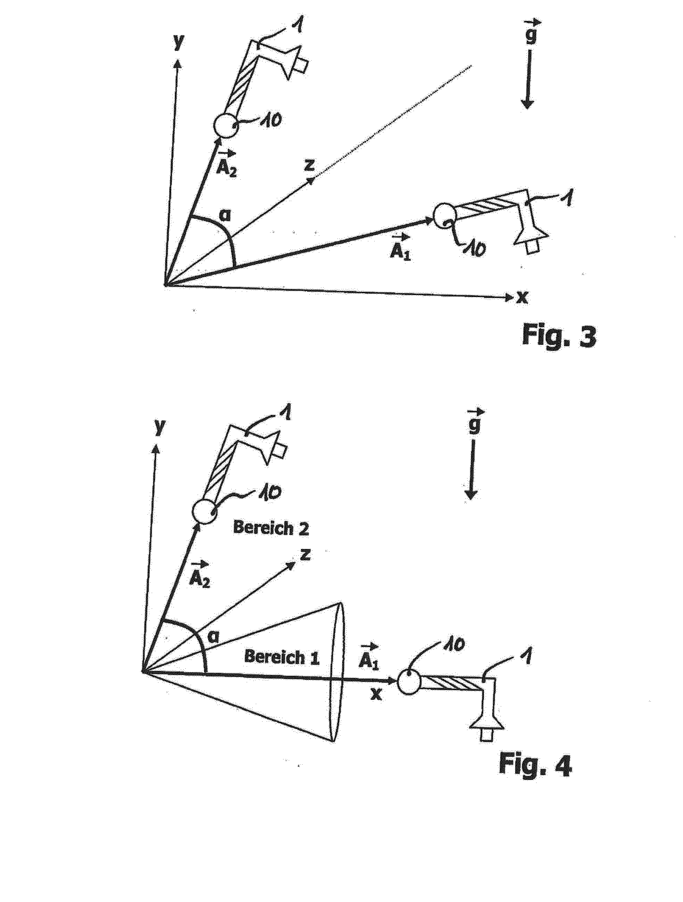

In Fig. 3 ist eine schematische Darstellung einer Ausführungsform des erfindungsgemäßen Verfahrens nochmals unter Angabe der expliziten Positionsvektoren zur Bestimmung einer Winkelabweichung im Raum dargestellt. Hierbei wird das Werkzeug 1 zunächst aus einer Lage, welche durch den *̅A̅*̅₁ Positionsvektor beschrieben wird, in eine zweite Lage überführt, welche durch den Positionsvektor *̅A̅*̅₂ beschrieben ist. Die Lageänderung kann hierbei frei im Raum erfolgen. Aus der Winkelabweichung der beiden Positionsvektoren *̅A̅*̅₁ und *̅A̅*̅₂ wird der Wert der Winkelabweichung α bestimmt, welcher zur Ermittlung einer Information über die Orientierung des Werkzeuges 1 vorgesehen ist. Der Positionsvektor *̅A̅*̅₁ kann hierbei der erste Positionsvektor des Werkzeuges 1 sein, welcher etwa beim Abgleichen der anfänglichen Werkzeuglage mit einer Bezugslage bestimmt wird, oder aber auch ein zeitlich darauf nachfolgender Positionsvektor. Besonders vorteilhaft wird der Positionsvektor *̅A̅*̅₁ in Bezug auf die Richtung der Erdbeschleunigung *̅g̅*̅ bestimmt. Hierzu ist das Werkzeug 1 in eine fest definierte Lage in Bezug auf die Richtung des Erdbeschleunigungsvektors *̅g̅*̅ bringen, so dass beide in einem festen Verhältnis zueinander stehen. Insbesondere ist es vorteilhaft, wenn der Positionsvektor *̅A̅*̅₁ parallel zum Vektor des Erdbeschleunigungsfeldes *̅g̅*̅ verläuft.

In Fig. 4 ist eine weitere Ausführungsform des erfindungsgemäßen Verfahrens zur Bestimmung der Lageänderung eines handgeführten Werkzeuges im Raum dargestellt. Hierbei wird das Werkzeug 1 wiederum aus einer anfänglichen Lage, welche durch den Positionsvektor *̅A̅*̅₁ dargestellt ist, in eine zeitlich nachfolgende Lage, welche durch den Positionsvektor *̅A̅*̅₂ dargestellt ist, überführt. Zwischen beiden Positionsvektoren wird eine Winkelabweichung α bestimmt. Ausführungsgemäß wird aus der bestimmten Winkelabweichung α eine Information über die Orientierung des Werkzeuges ermittelt, welche zu unterscheiden erlaubt, ob das Werkzeug in einem Bereich 1 oder in einem Bereich 2 angeordnet ist. Beide Bereiche sind einem Betriebsmodus des Werkzeuges 1 zugeordnet, so dass beim Überschreiten der Werkzeuglage aus dem Bereich 1 in den Bereich 2 eine Änderung des Betriebsmodus erfolgt. Hierbei ist auch darauf hinzuweisen, dass beide Bereiche 1 und 2 lediglich durch eine Winkelstellung des Werkzeuges 1 im Raum voneinander unterschieden werden. Insbesondere handelt es sich bei beiden Bereichen nicht um Bereiche eines Koordinatensystems, deren Beschreibung die Erfassung dreier Raumrichtungen erfordern würde. So ist vorliegend der Bereich 1 als Kegelstumpf dargestellt, dessen Spitze mit dem Ursprung des Koordinatensystems übereinstimmt. Folglich wird das Werkzeug in eine beliebige Raumrichtung um den Winkel α von seiner durch den *̅A̅*̅₁ Positionsvektor dargestellten anfänglichen Position weg bewegt, wobei sich mittels der berechneten Winkelabweichung α bestimmen lässt, ob das Werkzeug 1 aus dem Bereich 1 in den Bereich 2 übergeführt wurde. Bei erfolgter Überführung kann eine Veränderung des Betriebsmodus durch die nicht gezeigte Werkzeugsteuerung 2 veranlasst werden.

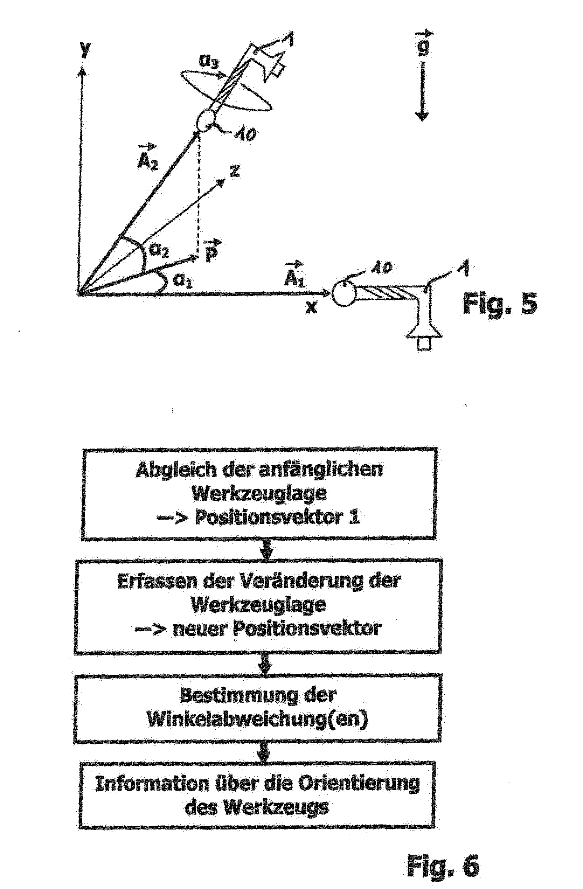

Fig. 5 zeigt eine weitere Ausführungsform des erfindungsgemäßen Verfahrens zur Bestimmung einer Lageänderung eines handgeführten Werkzeuges, welches zur Bestimmung einer genauen Position bzw. genauen Orientierung des Werkzeuges 1 im Raum insgesamt drei Winkelabweichungen α₁, α₂ und α₃ bestimmt. Die Winkelabweichung α₁ entspricht hierbei einem Azimutwinkel. Die Winkelabweichung α₂ entspricht einem Polarwinkel. Beide können aus geeigneten trigonometrischen Verhältnissen des Positionsvektors *̅A̅*̅₁ und des zeitlich nachfolgenden Positionsvektors *̅A̅*̅₂ bestimmt werden. Die Winkelabweichung α1 gibt hierbei die Winkelabweichung des in die x, z Ebene projizierten Vektors P an, welcher aus der Projektion des Positionsvektors *̅A̅*̅₂ in die x, z Ebene bestimmt ist. Um darüber hinaus noch Aussagen über die relative Rotation bzw. Orientierung des Werkzeuges 1 in Bezug auf den Positionsvektor Ä₂ machen zu können, wird eine weitere Winkelabweichung α₃ bestimmt, welche eine Rotation um die Längserstreckungsrichtung des Handgriffes des Werkzeuges 1 erfasst. Mittels Erfassung dieser Dreierwinkelabweichungen α₁, α₂ und α₃ ist eine umfangreichere und genauere Bestimmung des Werkzeugkopfes in Bezug auf seine Raumlage möglich, die für die Erfüllung von schwereren Werkaufgaben bzw. komplexeren Geometrien erforderlich sein kann.

An dieser Stelle ist auch darauf hinzuweisen, dass die Verwendung von zwei oder mehr Winkeln sowohl für die Initialisierung zum Abgleichen der anfänglichen Werkzeuglage mit einer Bezugslage als auch für die Bestimmung der zeitlich nachfolgenden Orientierung des Werkzeuges bedeutungsvoll sein kann. So kann beispielsweise auch die Initialisierung über mehrere Positionsvektoren erfolgen, um damit die Lage des Werkzeuges im Raum vollständiger beschreiben zu können. Beispielsweise kann für eine horizontale Orientierung des Werkzeuges 1 eine zusätzliche Orientierungsinformation darüber bereitgestellt werden, ob und in welchem Winkel das Werkzeug in einer Lage links oder rechts von einem Werkstück angeordnet ist. Grundsätzlich ist es auch möglich, beliebig viele Positionsvektoren des Werkzeuges 1 zur Initialisierung heranzuziehen, deren räumliche Positionen anschließend bei Bedarf zu einem gegebenen Zeitpunkt berechnet werden können. Aufgrund der Initialisierung ist es jedoch normalerweise nicht notwendig, das Werkzeug exakt geometrisch zu beschreiben bzw. zu vermessen.

Fig. 6 zeigt ein Flussdiagramm zur Darstellung einer Ausführungsform des erfindungsgemäßen Verfahrens zur Bestimmung einer Lageänderung eines handgeführten Werkzeuges. Hierbei ist zunächst der Abgleich der anfänglichen Werkzeuglage zur Bestimmung eines Positionsvektors 1 erforderlich. Nach erfolgtem Abgleich wird das Werkzeug durch den Werker im Arbeitsprozess geeignet in seiner Raumlage verändert, wobei die Erfassung der Veränderung der Werkzeuglage durch einen zeitlich nachfolgenden neuen Positionsvektor erfolgen kann. Die Winkelabweichung von Positionsvektor und dem neu bestimmten Positionsvektor erlaubt Aufschlüsse darüber, wie sich das Werkzeug 1 in Bezug auf die Bezugslage verändert hat. Ausführungsgemäß wird die Winkelabweichung bzw. die Winkelabweichungen als Information über die Orientierung des Werkzeuges bereitgestellt. Die Winkelabweichung bzw. die Winkelabweichungen können in einer alternativen Ausführungsform auch entsprechend verarbeitet werden, so dass sie zur Ermittlung der Information über die Orientierung des Werkzeuges beitragen.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichen:

- 1: Werkzeug
- 2: Werkzeugsteuerung
- 10: Sensor
- 11: Festleiter

## Patentansprüche

1. Verfahren zur Bestimmung einer Lageänderung eines handgeführten Werkzeugs (1) im Raum, welches folgende Schritte aufweist:
- Abgleichen einer anfänglichen Werkzeuglage mit einer Bezugslage zur Bestimmung wenigstens eines ersten Positionsvektors des Werkzeuges, wobei zumindest eine Komponente des ersten Positionsvektors durch die Messung einer Komponente der Erdbeschleunigung in Richtung einer vorbestimmten Achse des Werkzeugs bestimmt wird (1);
- Erfassung einer Veränderung der Werkzeuglage während einer tatsächlichen Lageänderung des Werkzeugs (1) im Raum durch Bestimmung wenigstens einer Winkelabweichung eines neu bestimmten, zweiten, Positionsvektors von wenigstens einem zeitlich vorhergehenden Positionsvektor, wobei nach der Lageänderung zumindest eine Komponente des zweiten Positionsvektors durch Messung der Komponente der Erdbeschleunigung in Richtung der vorbestimmten Achse des Werkzeuges bestimmt wird;
- Bereitstellen einer Information über die Orientierung des Werkzeugs (1), welche aus der wenigstens einen Winkelabweichung ermittelt wird.

2. Verfahren nach Anspruch 1,
**dadurch gekennzeichnet, dass** die Erfassung der Veränderung der Werkzeuglage mittels wenigstens eines am Werkzeug angebrachten Beschleunigungssensors (10) erfolgt, welcher die wenigstens eine Winkelabweichung direkt oder indirekt erfasst.

3. Verfahren nach einem der vorhergehenden Ansprüche,
**dadurch gekennzeichnet, dass** die wenigstens eine Winkelabweichung wenigstens 0° und höchstens 180° ist.

4. Verfahren nach einem der vorhergehenden Ansprüche,
**dadurch gekennzeichnet, dass** die Bestimmung wenigstens einer Winkelabweichung die Bestimmung einer Neigungslage des Werkzeugs (1) relativ zu einem Positionsvektor umfasst.

5. Verfahren nach einem der vorhergehenden Ansprüche,
**dadurch gekennzeichnet, dass** zur Erfassung der Veränderung der Werkzeuglage zwei oder drei Komponenten des ersten bzw. zweiten Positionsvektors durch Messung von zwei oder drei Komponenten der Erdbeschleunigung in Richtung von zwei oder drei vorbestimmten Achsen des Werkzeuges bestimmt wird.

6. Verfahren nach einem der vorhergehenden Ansprüche,
**dadurch gekennzeichnet, dass** die Bestimmung der Winkelabweichung mittels Berechnung des Quotienten aus dem Skalarprodukt und dem Betragsprodukt zwischen einem neu ermittelten Positionsvektor und wenigstens einem zeitlich vorhergehenden Positionsvektor erfolgt.

7. Verfahren nach einem der vorhergehenden Ansprüche 2 bis 6,
**dadurch gekennzeichnet, dass** der oder die Sensoren statische Beschleunigungssensoren sind und die wenigstens eine Winkelabweichung mittels statischer Beschleunigungswerte der Beschleunigungssensoren berechnet wird.

8. Verfahren nach Anspruch 7,
**dadurch gekennzeichnet, dass** der oder die Sensoren (10) einen dreiachsigen Beschleunigungssensor umfassen.

9. Verfahren nach Anspruch 7,
**dadurch gekennzeichnet, dass**
der oder die Sensoren (10) drei einachsige Beschleunigungssensoren umfassen.

10. Verfahren nach einem der vorhergehenden Ansprüche,
**dadurch gekennzeichnet, dass**
die Beschleunigungswerte wenigstens eines Sensors (10) relativ zu dem Wert der Erdbeschleunigung berechnet werden.

11. Verfahren nach einem der vorhergehenden Ansprüche,
**dadurch gekennzeichnet, dass**
die Ermittlung der Information über die Orientierung des Werkzeugs aus der wenigstens einen Winkelabweichung die Lage des Sensors (10) am Werkzeug (1) berücksichtigt.

12. Verfahren nach einem der vorhergehenden Ansprüche,
**dadurch gekennzeichnet, dass**
der zeitlich vorhergehende Positionsvektor zur Bestimmung wenigstens einer Winkelabweichung ein vorbestimmter Referenzvektor, insbesondere der Vektor der Erdanziehungskraft ist.

13. Verfahren nach einem der vorhergehenden Ansprüche,
**dadurch gekennzeichnet, dass**
das Abgleichen einer anfänglichen Werkzeuglage mit einer Bezugslage die Bestimmung zweier Positionsvektoren des Werkzeugs (1) erlaubt, welche senkrecht zueinander liegen und ein zweidimensionales Koordinatensystem definieren, und
die Erfassung der Veränderung der Werkzeuglage während einer tatsächlichen Lageänderung des Werkzeugs (1) im Raum die Erfassung eines neu bestimmten Positionsvektors in Projektion zu dem Koordinatensystem umfasst.

14. Werkzeug und/oder Werkzeugsteuerung, insbesondere zum Ausführen eines Verfahrens nach einem der vorhergehenden Ansprüche, umfassend mindestens einen Beschleunigungssensor zur Messung von mindestens einer, insbesondere mindestens zwei, vorzugsweise mindestens drei Komponenten der Erdbeschleunigung in Richtung einer bzw. zweier bzw. dreier vorbestimmter Achsen des Werkzeuges, wobei der Sensor vorzugsweise (fest) mit dem Werkzeug verbunden ist.

15. Werkzeug und/oder Werkzeugsteuerung nach Anspruch 14,
**dadurch gekennzeichnet, dass**
das Werkzeug (1) ein Schweißwerkzeug oder ein Fügewerkzeug oder ein Bohrwerkzeug oder ein Fräswerkzeug oder ein Werkzeug zur Durchführung von Beschichtungen, beispielsweise eine Sprühpistole, ist.

16. Werkzeug und/oder Werkzeugsteuerung nach einem der Ansprüche 14 oder 15, **dadurch gekennzeichnet, dass**
wenigstens einam Werkzeug (1) angebrachter Sensor (10) an oder in einem Bediengriff oder einem Handteil des Werkzeugs (1) angebracht ist.
